# EUROPEAN PATENT APPLICATION

(11) **EP 1 331 183 A1**
(43) Date of publication of application: **30.07.2003**
(21) Application number: 01970152.3
(22) Date of filing: 19.09.2001
(51) Int. Cl.: B65G 53/48, B65G 65/46, B05B 7/14, B05C 19/06

(54) **POWDER WEIGHT OR VOLUMETRIC OR COUNTING FEEDER**

(30) Priority: 20.09.2000 JP 2000285749
(71) Applicant: NIHON PARKERIZING CO., LTD., Chuo-ku, Tokyo 103-0027 (JP)
(72) Inventor: HAJIMA, Masayuki c/o Nihon Parkerizing Co., Ltd., Chuo-ku, Tokyo 103-0027 (JP); SUGIMOTO, Masamitsu c/o Nihon Parkerizing Co. Ltd., Chuo-ku, Tokyo 103-0027 (JP); KUSUNOKI, H. c/o Funabashi Plant, Kubota Ltd., Funabashi-shi, Chiba 273-0018 (JP)
(74) Representative: Winter, Brandl,&Fürniss, Hübner Röss, Kaiser, Polte Partnerschaft
(86) International application number: JP0108147
(87) International publication number: WO02024558

(57) **Abstract**

In a powder quantitative supply apparatus according to the present invention, fluidizing air is blown from a controller 28 into an air chamber 13 of a pressurized powder hopper 11 to maintain a powder coating material F in a fluidized state and pressurize the inside of the pressurized powder hopper 11. In a state where the outlet portion of a screw feeder 14 and the inside of the pressurized powder hopper 11 are mutually kept at equal pressures through an equalizing line 20, a drive current is supplied from the controller 28 to a motor 18 and transport air is supplied to a pressure-feeding nozzle 19. Thus, the screw of the screw feeder 14 rotates so as to discharge the fluidized state powder coating material F from the inside of the pressurized powder hopper 11 to be guided to the pressure-feeding nozzle 19. The powder paint is thus sprayed from the pressure-feeding nozzle 19 to an object to be coated by the transport air.

## Description

### [Technical Field]

This invention relates to a powder quantitative supply apparatus, and in particular, relates to an apparatus capable of quantitatively supplying a large volume of a powder with a small air volume.

### [Background Art]

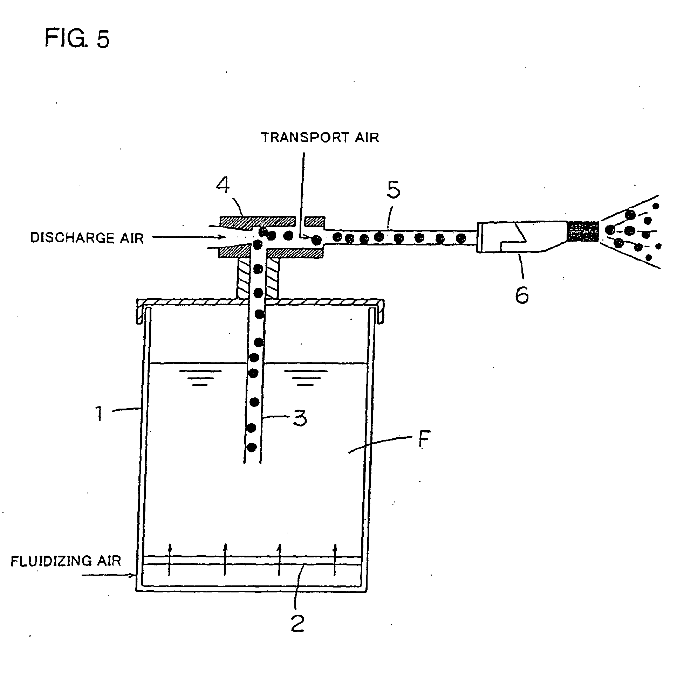

It is necessary to supply a fixed quantity of a powder coating material at all times to a coating gun in order to homogenize a finished coating film and effectively utilize the coating material in coating work with powder. This type of conventional powder supplying apparatus is shown in Fig. 5. A powder hopper 1 that receives a powder coating material F therein is provided with a porous plate 2, which is a so-called fluidized bed tank. Fluidizing air is blown in, and the powder coating material F is maintained in a fluidized state within the powder hopper 1. One end of a suction pipe 3 is inserted within the powder hopper 1, and the other end of the suction pipe 3 is connected to an ejector pump 4. In addition, a coating gun 6 is connected to the ejector pump 4 through a transporting hose 5. Discharge air from a compressed air source that is not shown in the figure is blown into the ejector pump 4 when the coating gun 6 operates, and the powder coating material F, whose supply amount is determined based on the flow rate of this discharge air, is aspirated into the suction pipe 3 from the powder hopper 1. Further, transport air from the compressed air source is blown into the ejector pump 4, the powder coating material F is supplied to the coating gun 6 by the discharge air and the transport air, through the transporting hose 5, and is sprayed toward an object to be coated.

A supply amount detecting sensor is attached to the suction pipe 3, and the amount of powder supplied to the coating gun 6 can be made constant by controlling the amount of discharge air and the amount of transport air.

However, the powder coating material F is pressure-fed by only the ejector pump 4. Therefore, the pressure loss within the transporting hose 5 becomes large, and it becomes impossible to supply the powder coating material F, if an attempt is made to supply a large volume of the powder coating material F, or to supply the powder coating material F by using a thin transporting hose 5.

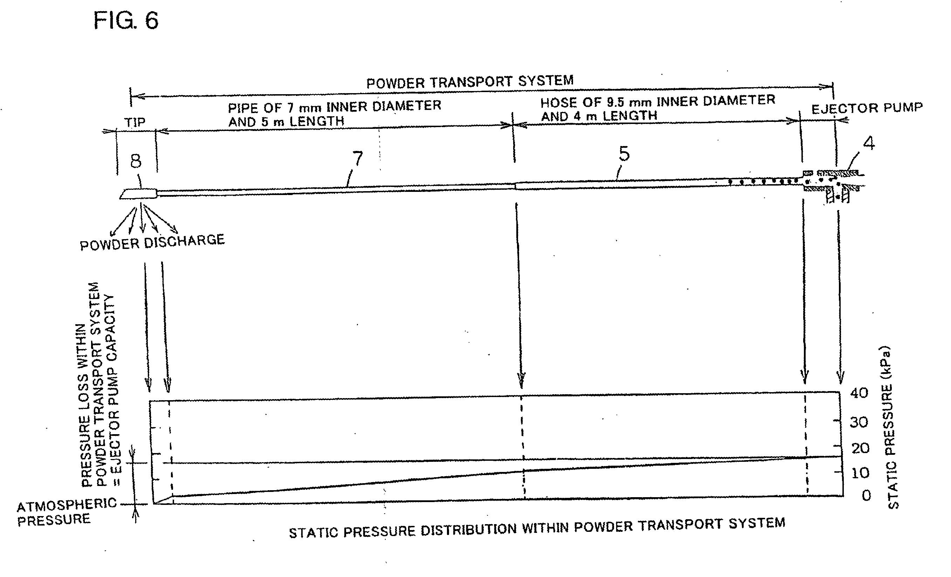

For example, results like those shown in Fig. 6 are obtained by taking measurements of the static pressure distribution within a transporting system, from the ejector pump 4 to a powder discharge tip 8, when the transporting hose 5 having an inner diameter of 9.5 mm and a length of 4 m is attached to the ejector pump 4, a pipe 7 having an inner diameter of 7 mm and a length of 5 m is attached to an end of the transporting hose 5, and in addition, the powder discharge tip 8 is attached to an end of the pipe 7. The amount of transport air was 0.065 m³/min, and the amount of powder transported was 70 g/min here.

In general, the pressure capacity of the injector pump 4 has a maximum on the order of 15 to 20 kPa, and therefore the transport capacity of the powder becomes 100 to 150 g/min at maximum. That is, it is impossible to transport a large volume exceeding an amount on the order of 150 g/min if a powder transporting system like that shown in Fig. 6 is used.

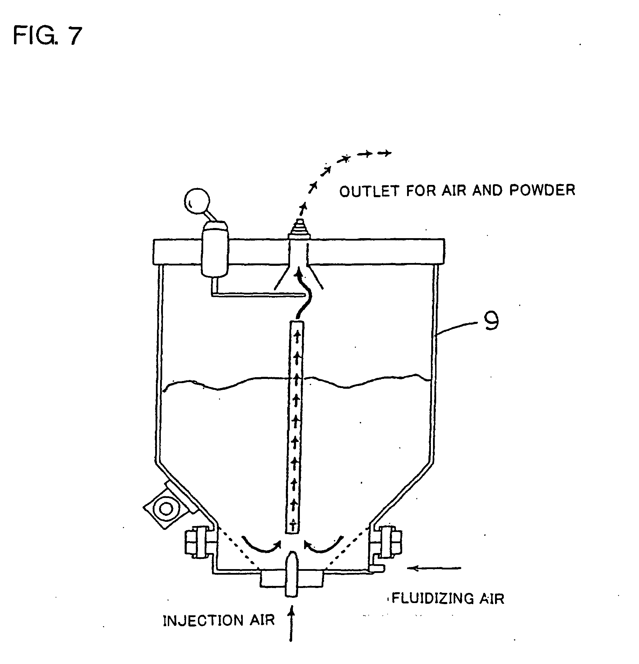

Further, if an attempt is made to supply a large volume of powder and a pressure tank 9 like that shown in Fig. 7 is used, the amount of powder discharged from the pressure tank 9 is influenced by pressure changes within the pressure tank 9, fluidic state changes in the powder, and the like, and therefore sufficient quantitative characteristics cannot be assured. Further, the fluidic state changes in the conventional pressure tank 9, and therefore the powder cannot be replenished into the tank during powder discharge.

### [Disclosure of the Invention]

This invention has been made in order to solve these problems, and therefore an object thereof is to provide a powder quantitative supply apparatus capable of quantitatively supplying a large volume of powder.

A powder quantitative supply apparatus according to the present invention includes: a pressurized powder hopper receiving a powder therein; a screw feeder for quantitatively discharging the powder from the powder hopper; a pressure-feeding nozzle connected to the screw feeder; a pressure air source for supplying transport air to the pressure-feeding nozzle to pressure-feed the powder discharged by the screw feeder; and an equalizing line for allowing an outlet of the screw feeder and the inside of the powder hopper to be in communication with each other to keep them at equal pressures.

Further, the powder quantitative supply apparatus according to the present invention may further include: a replenishing hopper disposed above the powder hopper and receiving therein a powder used for replenishment; a powder replenishing buffer line connecting a bottom portion of the replenishing hopper and an upper portion of the powder hopper with each other; and a pair of pinch valves provided to the powder replenishing buffer line with a distance therebetween.

The powder quantitative supply apparatus according to the present invention may further include a deaeration means for exhausting air contained in the powder within the screw feeder.

Further, it is preferable to employ as the powder hopper a fluidized bed tank or a vibrating tank for preventing the powder received therein from hanging.

### [Brief Description of the Drawings]

Fig. 1 is a diagram showing a powder quantitative supply apparatus according to an embodiment of this invention;
Fig. 2 is a diagram showing the static pressure distribution within a transporting system for a case in which the powder quantitative supply apparatus according to the embodiment is used;
Fig. 3 is a diagram showing the relationship between the number of screw rotations and the powder supply amount;
Fig. 4 is a diagram showing the relationship between the powder supply amount and the static pressure of an inner portion of a hopper;
Fig. 5 is a diagram showing a conventional powder supply apparatus;
Fig. 6 is a diagram showing the static pressure distribution within a transporting system for a case in which the conventional powder supply apparatus is used; and
Fig. 7 is a diagram showing a conventional pressure tank.

### [Best Mode for Implementing the Invention]

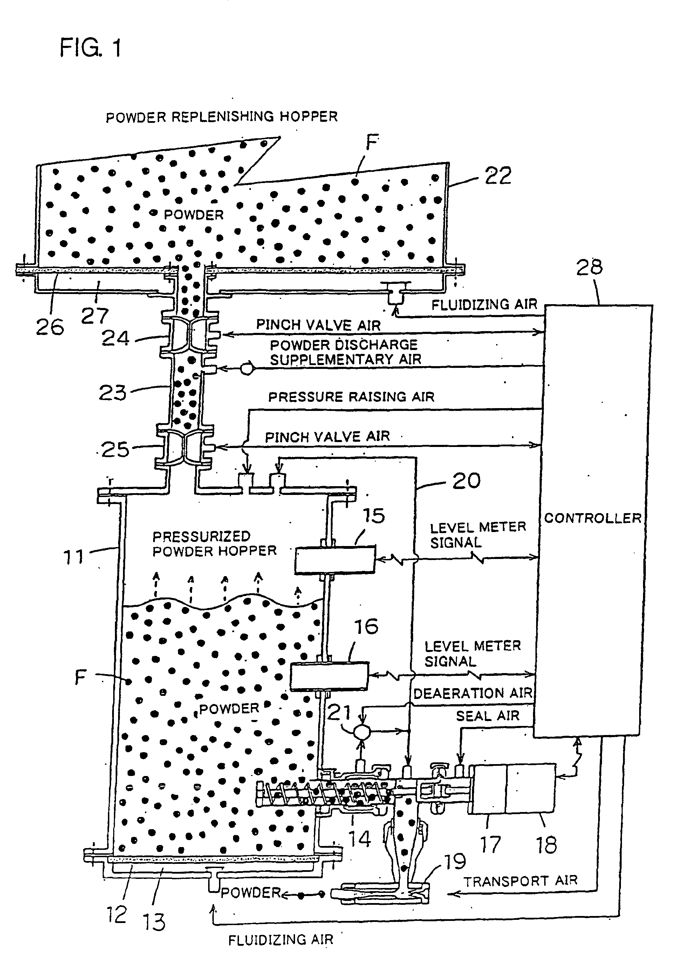

The structure of a powder quantitative supply apparatus according to an embodiment of the present invention is shown in Fig. 1. A pressurized powder hopper 11 is a fluidized bed tank, and an air chamber 13 is formed in a bottom portion thereof through a porous plate 12. A screw feeder 14 is attached to a lower portion of a side surface of the pressurized powder hopper 11, and an upper limit level meter 15 and a lower level meter 16 are attached to an upper portion and a center portion of the side surface thereof, respectively. A motor 18 is coupled to a rotational shaft of the screw feeder 14 through a speed reducer 17, and a pressure-feeding nozzle 19 is connected to an outlet of the screw feeder 14. Further, the outlet of the screw feeder 14 and a ceiling portion of the pressurized powder hopper 11 are in communication with each other through an equalizing line 20. In addition, an injector 21 used for exhausting is connected to the screw feeder 14, and an outlet of the injector 21 is connected to the equalizing line 20.

A replenishing hopper 22 is disposed above the pressurized powder hopper 11, and a bottom portion of the replenishing hopper 22 and an upper portion of the pressurized powder hopper 11 are mutually connected by a powder replenishing buffer line 23. Pinch valves 24 and 25 are provided to the powder supply buffer line 23 with a distance therebetween. Note that the replenishing hopper 22 is also a fluidized bed tank similar to the pressurized powder hopper 11, and an air chamber 27 is formed in a bottom portion thereof through a porous plate 26.

A controller 28 is electrically connected to the upper limit level meter 15, the lower limit level meter 16, and the motor 18, and is constructed such that pressurized air can be selectively supplied from the controller 28 to the air chamber 13 of the pressurized powder hopper 11, the pressure-feeding nozzle 19, the injector 21, the pinch valves 24 and 25, the air chamber 27 of the replenishing hopper 22, and the coupling portion between the rotational shaft of the screw feeder 14 and the speed reducer 17. That is, the controller 28 forms a pressurized air source in the present invention.

Next, an operation of the powder quantitative supply apparatus according to this embodiment is explained. First, fluidizing air is blown from the controller 28 respectively into the air chamber 13 of the pressurized powder hopper 11 and the air chamber 27 of the replenishing hopper 22. The fluidizing air is blown into the inside of the pressurized powder hopper 11 and the inside of the replenishing hopper 22 through the porous plates 12 and 26, respectively. Thus, the powder coating material F in each place is maintained in a fluidized state. Note that both of the pinch valves 24 and 25 are closed by means of the controller 28. The inside of the pressurized powder hopper 11 is maintained at a pressure on the order of 5 kPa, for example, by the blowing-in of the fluidizing air.

In this state, a driver current is supplied from the controller 28 to the motor 18, and transport air is supplied to the pressure-feeding nozzle 19, deaeration air is supplied to the injector 21, and seal air is supplied to the coupling portion between the rotational shaft of the screw feeder 14 and the speed reducer 17. A screw of the screw feeder 14 is driven by the motor 18 and rotates through the speed reducer 17. The fluidized state powder coating material F is discharged from the inside of the pressurized powder hopper 11 and guided to the pressure-feeding nozzle 19. Here, the powder coating material F is sprayed from the pressure-feeding nozzle 21 by the transport air toward the object to be coated. Deaeration air is supplied to the injector 21 from the controller 28 at this point, and therefore air within the screw feeder 14 is exhausted by the injector 21. Further, the outlet portion of the screw feeder 14 and the inside of the pressurized powder hopper 11 are mutually kept at equal pressures by the equalizing line 20.

The pressurized powder hopper 11, which is sealed except for a powder outlet portion, is used in this way, and therefore it becomes possible to perform pressurization corresponding to pressure losses within the transport system for the powder coating material F, and large volume powder supply becomes possible, even if a long, thin transport system is used.

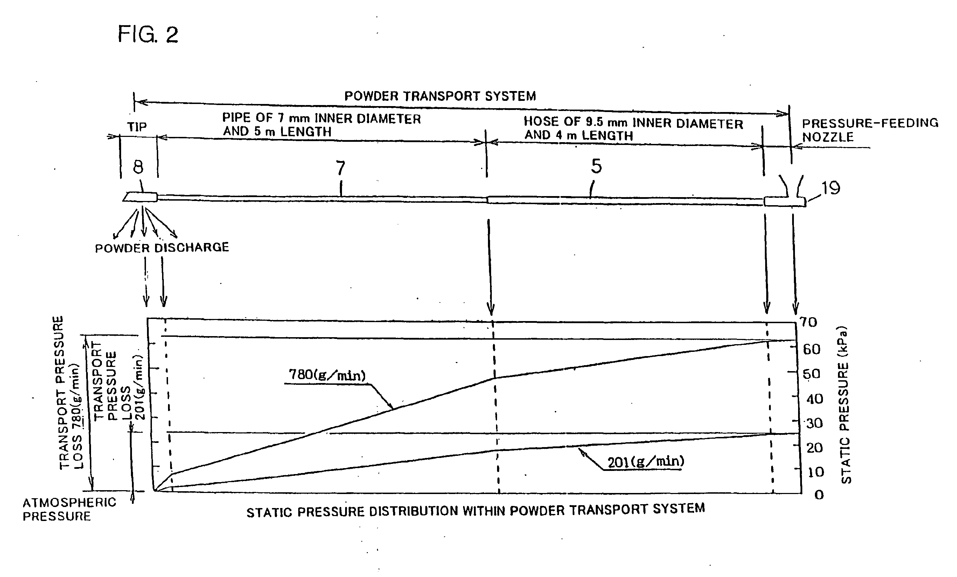

For example, similar to the transport system shown in Fig. 6, results like those shown in Fig. 2 are obtained by taking measurements of the static pressure distribution within the transporting system, from the pressure-feeding nozzle 19 to the powder discharge tip 8, when the transporting hose 5 having an inner diameter of 9.5 mm and a length of 4 m is attached to the pressure-feeding nozzle 19, the pipe 7 having an inner diameter of 7 mm and a length of 5 m is attached to the end of the transporting hose 5, and in addition, the powder discharge tip 8 is attached to the end of the pipe 7, for two cases, with the amount of transport air set to 0.065 m³/min, and the amount of powder transported set to 201 g/min and 780 g/min.

It is normally not necessary to provide the pressure raising air shown in Fig. 1, but if the capacity of the pressurized powder hopper 11 is as much as 60 liters, for example, then it takes time for the pressure within the powder hopper 11 to rise after beginning powder transport. During this time, the powder discharged from the screw feeder 14 is therefore obstructed within the system if the powder is discharged in a large volume. In view of the above, the pressure raising air shown in Fig. 1 is supplied in advance, the pressure within the powder hopper 11 is raised, and the supply of the pressure raising air is stopped at the same time when the powder is discharged. The time lag for the rise of the pressure within the powder hopper 11 can thus be made shorter, and it becomes possible to transport a large volume of powder even in cases where a large capacity powder hopper is used.

Further, since the pressurized powder hopper 11 is used, the amount of transport air supplied to the pressure-feeding nozzle 19 can be made less for cases in which a transport hose thinner than conventional one is used.

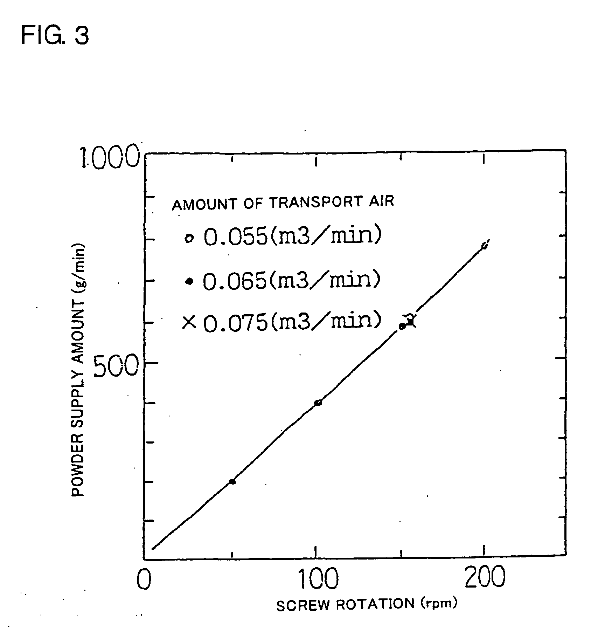

Note that, when the amount of powder supplied at the tip portion of the powder discharge tip 8 is checked for cases in which the number of screw rotations in the screw feeder 14 is changed, a nearly proportional relationship between the number of screw rotations and the amount of powder supplied has resulted as shown in Fig. 3, and it is understood that, even if the amount of transport air is changed, there is almost no influence on the amount of powder supplied.

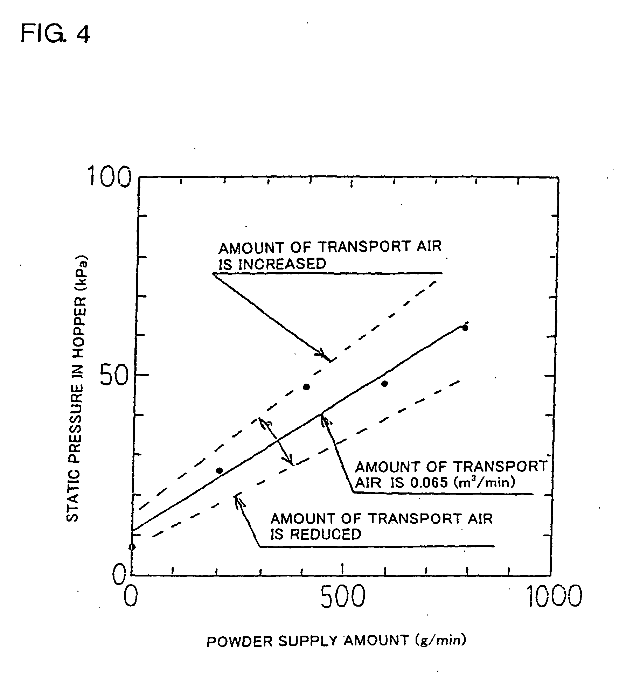

Further, the relationship between the amount of powder supplied and the necessary static pressure within the pressurized powder hopper 11 to supply that amount is shown Fig. 4. If the amount of transport air is reduced, the pressure loss is reduced, and the necessary static pressure within the powder hopper 11 also drops. However, the quantitative supply cannot be performed due to a build-up of powder at an inner line portion if the in-line flow rate becomes equal to or less than a predetermined flow rate. In the transport system shown in Fig. 2, the minimum transport air amount capable of maintaining the predetermined in-line flow rate is 0.065 m³/min.

Returning to Fig. 1, the supply of the powder coating material F progresses, and if the amount of the powder coating material F within the pressurized powder hopper 11 drops, and the lower limit level meter 16 operates, then the controller 28 opens the upper side pinch valve 24, and the fluidized state powder coating material F is guided from the replenishing hopper 22 to the powder replenishing buffer line 23. After that, the upper side pinch valve 24 is closed and the lower side pinch valve 25 is opened, and powder discharge supplementary air is then supplied within the powder replenishing buffer line 23. The powder coating material F guided into the powder replenishing buffer line 23 is thus introduced within the pressurized powder hopper 11. The lower side pinch valve 25 is thereafter closed. By repeating these operations, the replenishment of the powder coating material F from the replenishing hopper 22 to the pressurized powder hopper 11 is performed. The amount of the powder coating material F within the pressurized powder hopper 11 then increases, and at the point where the upper limit level meter operates, the controller 28 closes both of the pinch valves 24 and 25, the supply of powder discharge supplementary air is stopped, and the replenishment of the powder coating material F is complete.

It thus becomes possible to perform the replenishment of the powder coating material F while continuing to supply the powder from the pressurized powder hopper 11 by controlling the opening and closing of the pair of mutually separated pinch valves 24 and 25.

Further, the quantitative supply of the powder coating material F has been discussed in the aforementioned embodiment, but the present invention is not limited to coating materials, and can be applied to the quantitative of various types of powders .

As explained above, in accordance with the present invention, the powder is quantitatively discharged from the pressurized powder hopper, which receives the powder therein, by the screw feeder, before being pressure-fed by the pressure-feeding nozzles. As a result, the quantitative supply of a large volume of the powder becomes possible.

Further, the replenishment of the powder from the replenishing hopper to the powder hopper becomes possible while performing the quantitative supply of the powder from the powder hopper, when the replenishing hopper is disposed above the powder hopper, the bottom portion of the replenishing hopper and the upper portion of the powder hopper are connected by the powder replenishing buffer line, and the pair of mutually separated pinch valves are provided to the powder replenishing buffer line.

## Claims

1. A powder quantitative supply apparatus comprising:
a pressurized powder hopper receiving a powder therein;
a screw feeder for quantitatively discharging the powder from the powder hopper;
a pressure-feeding nozzle connected to the screw feeder;
a pressure air source for supplying transport air to the pressure-feeding nozzle to pressure-feed the powder discharged by the screw feeder; and
an equalizing line for allowing an outlet of the screw feeder and the inside of the powder hopper to be in communication with each other to keep them at equal pressures.

2. A powder quantitative supply apparatus according to claim 1, further comprising:
a replenishing hopper disposed above the powder hopper and receiving therein a powder used for replenishment;
a powder replenishing buffer line connecting a bottom portion of the replenishing hopper and an upper portion of the powder hopper with each other; and
a pair of pinch valves provided to the powder replenishing buffer line with a distance therebetween.

3. A powder quantitative supply apparatus according to claim 1, further comprising a deaeration means for exhausting air contained in the powder within the screw feeder.

4. A powder quantitative supply apparatus according to claim 1, wherein the powder hopper is a fluidized bed tank.

5. A powder quantitative supply apparatus according to claim 1, wherein the powder hopper is a vibrating tank.
